# EUROPEAN PATENT APPLICATION

(11) **EP 4 741 807 A1**
(43) Date of publication of application: **13.05.2026**
(21) Application number: 24836051.3
(22) Date of filing: 02.07.2024
(51) Int. Cl.: G01N 21/78, G01N 31/16

(54) **TITRATION SYSTEM AND PROGRAM**

(30) Priority: 04.07.2023 JP 2023110285
(71) Applicant: I-Motion Technology Co., Ltd., Morioka city, Iwate 020-0857 (JP)
(72) Inventor: OKADA Yasushi, Morioka City, Iwate 0200857 (JP); NAKAMURA Takeshi, Morioka City, Iwate 0200857 (JP); ONODERA Kazunari, Morioka-City, Iwate 0200857 (JP); AIDA Yohei, Settsu city, Osaka 5660022 (JP); SARUTA Ippei, Settsu city, Osaka 5660022 (JP)
(74) Representative: Hasegawa, Kan
(86) International application number: PCT/JP2024/023976
(87) International publication number: WO 2025/009538

(57) **Abstract**

A versatile titration system, and the like, are provided that is capable of accurately determining an equivalence point. The titration system comprises: a camera installed so as to be able to capture a flask containing a sample solution; an image generation part that generates image data that represents an image in which a sample solution is captured, based on an image signal output from the camera; a storage part that stores multiple parameter sets including: a type of color value to be used as a determination target when determining an equivalence point; and a determination criterion corresponding to the type of color value; an operation input part; a setting part that reads, from among the multiple parameter sets, a parameter set that depends on an input signal accepted by the operation input part, from the storage part, and sets a type of color value to be used as a determination target, and a determination criterion, based on the parameter set; a pixel value acquisition part that acquires a pixel value in an area of the image, in which a sample solution is captured; a color value acquisition part that acquires a color value based on the pixel value acquired by the pixel value acquisition part; and a determination part that evaluates the color value based on the determination criterion.

## Description

### TECHNICAL FIELD

The present invention relates to a titration system and a program.

### BACKGROUND ART

As a titration method, a method in which a standard solution added with a titration indicator is dripped into a sample solution and the color of the solution is observed (colorimetric method), and a method in which the potential difference is measured while a standard solution is dripped into a sample solution in which an electrode is installed (potentiometric titration; see, for example, PLT 1), are known. An automatic titrator has also been proposed that detects changes in the color development status of indicators based on the image information of the camera (see, for example, PLT 2).

### PRIOR ART DOCUMENTS

### PATENT LITERATURE

PLT 1: JP2010-101724 A
PLT 2: JP06(1994)-058882 A

### SUMMARY OF INVENTION

### PROBLEMS TO BE SOLVED BY INVENTION

In the colorimetric method, which is based on visual confirmation, in addition to the heavy burden on the operator, there may be variations in the determination of the equivalence point, depending on the operators. On the other hand, in the potentiometric titration, the electrodes must be cleaned every time the titration is performed, and the series of tasks required for titration becomes cumbersome.

In addition, in PLT 2, the end point of the titration is detected with an emergence of a noticeable change in the brightness of the sample solution either by irradiating the sample solution with a light source of the same color or a complementary color as the titration indicator, or by providing a filter of the same color or a complementary color as the titration indicator in the light source. However, since various kinds of indicators are used in titration based on the colorimetric method, it is difficult to realize a versatile titration system when configurations are used in which the light source and filter are changed depending on the types of indicator.

The present invention has been made in view of the above, and an object of the present invention is to provide a versatile titration system and program that are capable of accurately determining an equivalence point.

### MEANS FOR SOLVING THE PROBLEMS

In order to solve the above-described problems, the titration system, which is an aspect of the present invention, comprises: a camera installed so as to be able to capture a flask containing a sample solution including an analyte and configured to capture the sample solution and output an image signal; an image generation part configured to generate image data that represents an image in which the sample solution is captured, based on an image signal output from the camera; a storage part configured to store multiple parameter sets including: a type of color value to be used as a determination target when determining an equivalence point; and a determination criterion corresponding to the type of color value, depending on a combination of an analyte and a standard solution added with a titration indicator; an operation input part configured to accept an input signal that depends on an external operation; a setting part configured to read, from among the multiple parameter sets, a parameter set that depends on an input signal accepted by the operation input part, from the storage part, and to set a type of color value to be used as a determination target, and a determination criterion, based on the parameter set; a pixel value acquisition part configured to acquire a pixel value in an area of an image, in which a sample solution is captured, the image being generated by the image generation part; a color value acquisition part configured to acquire a color value of the type set by the setting part, based on the pixel value acquired by the pixel value acquisition part; and a determination part configured to evaluate the color value acquired by the color value acquisition part, based on the determination criterion set by the setting part.

In the above-described titration system, the setting part may be configured to set multiple types of color values as a determination target and to set a relative relationship between the multiple types of color values as a determination criterion.

In the above-described titration system, the setting part may be configured to set one type of color value as a determination target and to set a threshold of the one type of color value as a determination criterion.

In the above-described titration system, the setting part may be configured to set one type of color value as a determination target and to set a mode of change of the one type of color value as a determination criterion.

In the above-described titration system, the setting part may be further configured to change the set color value type and determination criterion, depending on an input signal accepted by the operation input part.

The above-described titration system may further comprise an area designation part configured to designate a specific area within the image as an observation area, depending on an input signal accepted by the operation input part, and the pixel value acquisition part may be configured to acquire a pixel value in the observation area.

In the above-described titration system, the storage part may be configured to further store a measurement file that includes a pixel value acquired by the pixel value acquisition part and a color value acquired by the color value acquisition part, and may also be configured to further store a hash value of the measurement file.

The program, which is another aspect of the present invention, is a program that causes a computer to execute the following steps. The computer including an operation input part that accepts an input signal that depends on an external operation, and a storage part, the storage part storing multiple parameter sets including: a type of color value to be used as a determination target when determining an equivalence point; and a determination criterion corresponding to the type of color value, depending on a combination of an analyte and a standard solution added with a titration indicator, the steps including: an image generation step in which image data is generated, the image data representing an image in which a sample solution is captured, based on an image signal output from a camera installed so as to be able to capture a flask containing a sample solution including an analyte and configured to capture the sample solution and output an image signal; a setting step in which, a parameter set is read, from among the multiple parameter sets, that depends on an input signal accepted by the operation input part, from the storage part, and a type of color value to be used as a determination target, and a determination criterion, are set based on the parameter set; a pixel value acquisition step in which a pixel value is acquired in an area of an image, in which a sample solution is captured, the image being generated in the image generation step; a color value acquisition step in which a color value of the type set in the setting step is acquired, based on the pixel value acquired in the pixel value acquisition step; and a determination step in which the color value acquired in the color value acquisition step is evaluated based on the determination criterion set in the setting step.

### EFFECT OF INVENTION

According to the present invention, a versatile titration system can be realized that is capable of accurately determining an equivalence point.

### BRIEF DESCRIPTION OF DRAWINGS

[FIG. 1] FIG. 1 is a schematic diagram showing an exterior appearance of a titration system according to an embodiment of the present invention.
[FIG. 2] FIG. 2 is a schematic diagram showing an exterior appearance of a device body shown in FIG. 1.
[FIG. 3] FIG. 3 is a block diagram showing a schematic configuration of a titration system according to an embodiment of the present invention.
[FIG. 4] FIG. 4 is a schematic diagram illustrating the information stored in a titration method file.
[FIG. 5] FIG. 5 is a flowchart showing operations of a titration system according to an embodiment of the present invention.
[FIG. 6] FIG. 6 is a schematic diagram illustrating a camera observation screen.
[FIG. 7] FIG. 7 is a schematic diagram illustrating a method selection screen.
[FIG. 8] FIG. 8 is a schematic diagram illustrating a measurement file creation screen.
[FIG. 9] FIG. 9 is a schematic diagram illustrating a method confirmation screen.
[FIG. 10] FIG. 10 is a flowchart showing the titration process in FIG. 6.
[FIG. 11] FIG. 11 is a schematic diagram illustrating a titration screen.
[FIG. 12] FIG. 12 is a schematic diagram illustrating a titration screen.
[FIG. 13] FIG. 13 is a schematic diagram illustrating a titration screen.
[FIG. 14] FIG. 14 is a schematic diagram illustrating a measurement file selection screen.
[FIG. 15] FIG. 15 is a schematic diagram illustrating a titration analysis screen.
[FIG. 16] FIG. 16 is a schematic diagram illustrating a graph/image display screen.
[FIG. 17] FIG. 17 is a schematic diagram illustrating a method editing screen.
[FIG. 18] FIG. 18 is a graph (CMYK color space) showing measurement data in a validation experiment.
[FIG. 19] FIG. 19 is a graph (CMY color space) showing measurement data in a validation experiment.
[FIG. 20] FIG. 20 is a graph (RGB color space) showing measurement data in a validation experiment.
[FIG. 21] FIG. 21 is a graph (HSV color space) showing measurement data in a validation experiment.

### EMBODIMENTS OF INVENTION

Hereinafter, a titration system and a program according to embodiments of the present invention will be described with reference to the drawings. It should be noted that the present invention is not limited by these embodiments. In the description of each drawing, the same parts are denoted by the same reference numbers.

The drawings referred to in the following descriptions merely represent, in a schematic manner, the shape, size, and positional relationship, to the extent that the content of the present invention may be understood. In other words, the present invention is not limited only to the shapes, sizes, and positional relationships exemplified in the respective figures. In addition, the drawings may also include, among the same, parts having different dimensional relationships and ratios from each other.

### <Configuration of Titration System>

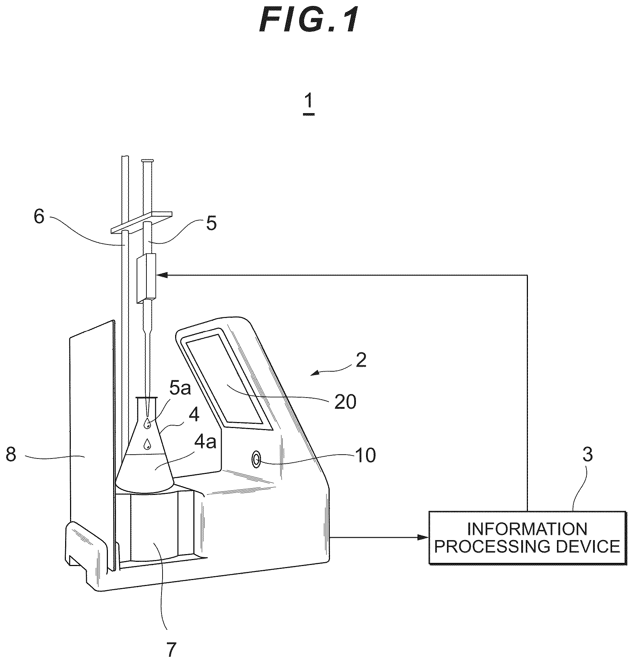

FIG. 1 is a schematic diagram showing an exterior appearance of a titration system according to an embodiment of the present invention. The titration system 1 shown in FIG. 1 is a system in which a standard solution 5a added with a titration indicator (which may be simply referred to as an "indicator solution" hereinafter) is dripped into a sample solution 4a containing an analyte and a color change of the sample solution caused thereby is detected. The system comprises a device body 2 and an information processing device 3 that is communicably connectable to the device body 2 by wire or wirelessly.

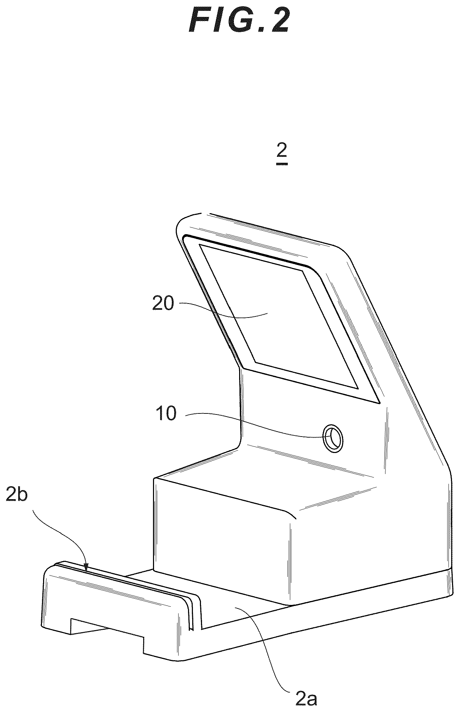

FIG. 2 is a schematic diagram showing an exterior appearance of a device body 2. As shown in FIG. 2, the device body 2 has a camera 10 and a light source 20 incorporated therein. The camera 10 is installed such that a flask 4 containing a sample solution 4a can be captured. The light source 20 is, for example, a white surface emitting LED light and illuminates the flask 4. In the present embodiment, the light source 20 is installed such that it illuminates the flask 4 from above the camera 10 and from the obliquely upward direction.

The device body 2 is provided with a stage installation part 2a, on which a stage 7 is installed for mounting the flask 4. By installing the stage 7 having a predetermined height on the stage installation part 2a and mounting the flask 4 on the stage 7, at least part of the flask 4 can be placed in the field of view of the camera 10.

A stage having a stirrer (magnetic stirrer) incorporated therein may be used as the stage 7. By inserting a stir bar into the flask 4 and operating the stirrer, the sample solution 4a and the standard solution 5a can be stirred in the flask, and a quick and uniform reaction can be generated. In addition, a support part 6 may be provided on the stage installation part 2a or the stage 7 to hold an electric burette 5 above the flask 4.

The electric burette 5 drips the standard solution 5a under the control of the information processing device 3. Of course, a manual burette may also be used instead of the electric burette 5.

In the device body 2, a groove-like back plate installation part 2b is provided into which a back plate 8 is to be inserted. By arranging the back plate 8 on the opposite side of the camera 10 and the light source 20 when viewed from the flask 4, it is possible to prevent ambient light from entering the camera 10.

It should be noted that the camera 10 and the light source 20 may not be incorporated in the device body 2 and these devices may be installed separately.

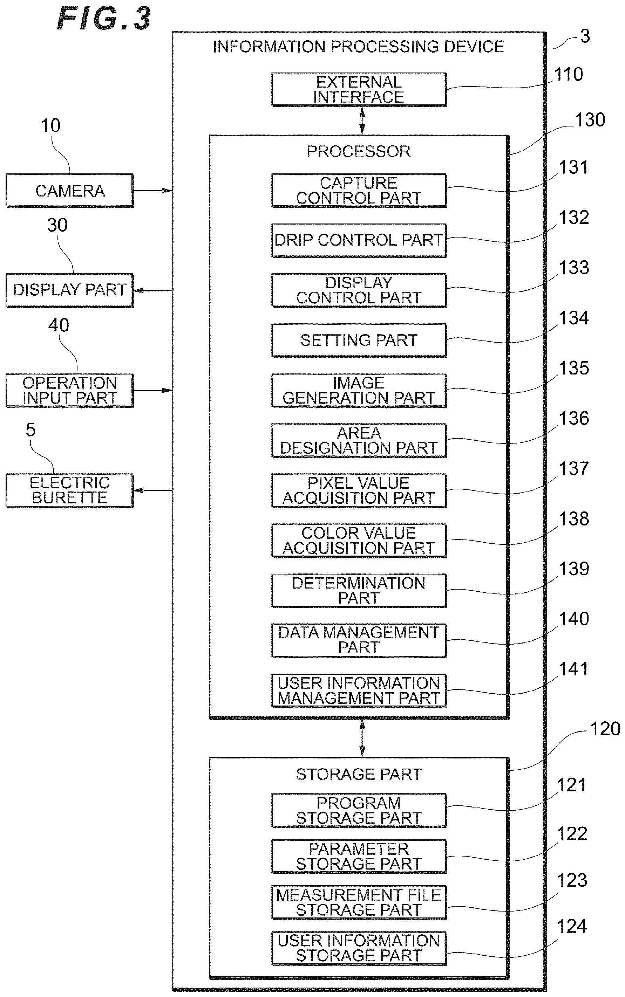

FIG. 3 is a block diagram showing a schematic configuration of the titration system 1. As shown in FIG. 3, the titration system 1 comprises: a camera 10 configured to capture the sample solution 4a and output an image signal; and an information processing device 3 configured to determine an equivalence point in titration by taking in the image signal output from the camera 10 and performing various processing.

The camera 10 is a capturing device that includes an imaging element, such as a charge coupled device (CCD) or a complementary metal oxide semiconductor (CMOS), and that is capable of shooting videos at a predetermined frame rate. The imaging element receives the light (subject image) that has entered the camera 10 and is imaged by an optical system at a receiving surface, and generates an electrical signal by performing photoelectric conversion. The camera 10 generates and outputs an image signal by applying certain signal processing such as amplification, A/D conversion, etc. to this electrical signal.

The information processing device 3 comprises an external interface (I/F) 110, a storage part 120, and a calculation part 130. The information processing device 3 may also comprise a display part 30 and an operation input part 40.

The display part 30 may be a display device such as a liquid crystal display, an organic EL display, and other displays. The operation input part 40 may be an input device, such as a keyboard, a mouse, a touch panel, an input button, or the like, and inputs a signal corresponding to an operation performed by a user to the calculation part 130.

The external interface 110 is an interface that performs input and output of various signals, such as output of control signals and input of image signals, with respect to external devices, such as the camera 10 and the electric burette 5 connected to the information processing device 3. The external interface 110 may adopt a communication standard such as a universal serial bus (USB), Bluetooth (registered trademark), wireless fidelity (Wi-Fi), or other various communication standards.

The storage part 120 may be configured by using a computer readable storage medium, such as a semiconductor memory (such as ROM or RAM) and/or a disk drive. The storage part 120 stores, in addition to an operating system program and a driver program, a program for causing the calculation part 130 to execute a predetermined performance, various types of data and parameters used during execution of the programs, and the like. In particular, the storage part 120 includes: a program storage part 121 that stores a titration program and other programs to determine an equivalence point based on the images captured by the camera 10; a parameter storage part 122 that stores multiple parameter sets used in determining an equivalence point; a measurement file storage part 123 that stores a measurement file created for each titration process performed in the titration system 1; and a user information storage part 124.

Multiple titration method files created for each titration method are stored in the parameter storage part 122. The titration method file is a file that stores parameters to be used when the titration system 1 performs the titration process, and the file is created for each titration method, such as a basic titration method using phenolphthalein (PP) or an acidic titration method using methyl orange (MO). Several titration method files related to the fundamental titration methods are stored in advance, as the initial setting, in the parameter storage part 122.

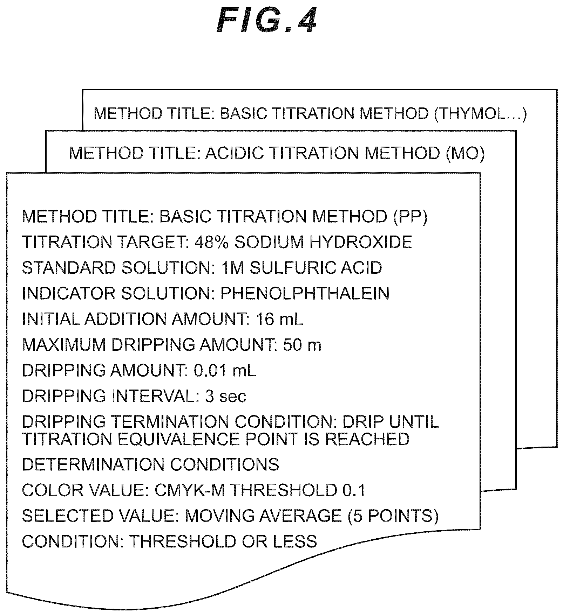

FIG. 4 is a schematic diagram illustrating the information stored in a titration method file. In each titration method file, the method title, titration target (sample solution), the standard solution, the indicator solution, the initial addition amount, the maximum dripping amount, the dripping amount per addition, the dripping interval, the dripping termination condition, the determination condition, and other information are stored. The determination condition from among the above includes: a type of color value to be used as a determination target when determining an equivalence point; and a determination criterion corresponding to such type of the color value, depending on the combination of an analyte and a standard solution added with a titration indicator.

In particular, in the case where the determination target is one type of color value, the determination criterion may include a threshold of such color value and a condition for the threshold (greater than or equal to the threshold, less than or equal to the threshold, or the like). In addition, in the case where the determination target is one type of color value, the determination criterion may be set in terms of the modes of change of such color value. For example, a determination criterion such as a sudden change in the first derivative (rate of change) of the color value, a change in the sign of the first derivative, or a change in the sign of the second derivative may be illustrated. Alternatively, in the case where the determination target is multiple types of color values, the determination criterion may include a relative relationship between these color values (e.g., the magnitude relationship between two types of color values, the ratio thereof, changes in the ratio, and the like). In addition, the determination criterion may include values to be used in the determination, from among the color values acquired by the measurement (hereafter referred to as the "selected values"). Examples of the selected values may include a measurement per addition, a moving average of multiple measurements of multiple additions, and the like.

Specifically, the color values that can be used in the determination of an equivalence point in the present embodiment include: R, G, B values in the RGB color space, a C value in the CMYK color space, an M value in the CMYK color space, Y and K values in the CMYK color space, C, M, and Y values in the CMY color space, H, S, and V values in the HSV color space, and H, L, and S values in the HLS color space. In the case of using each of these color values, an equivalence point can be determined by comparison with a preset threshold.

In addition, combinations of multiple types of color values that can be used in the determination of an equivalence point include respective combinations of C and M values, C and Y values, C and K values, M and Y values, M and K values, and Y and K values in the CMYK color space. In the case where these combinations are used, the equivalence point can be determined by the relative relationship between the two types of color values.

Typical examples of such color value types to be used as determination targets and such determination criteria are stored in the titration method files stored in the titration system 1 in advance. However, a user can change the color value type and the determination criterion to any type/criterion. In other words, the user can create a desired titration method by making arbitrary changes to various items, including the color value type and the determination criterion, with respect to the titration method files that have been stored in advance, and saving such file with a file name.

File information including the titration title, the lot number of the sample to be titrated, the sample number, the saved file name, and the like, the titration method used in the titration process, the image data of the images of the standard solution captured by the camera 10, and the measurement data including the pixel value in the observation area in the image and the color value converted from such pixel value, are stored in the measurement file stored in the measurement file storage part 123. Color values in all color spaces set in the information processing device 3 may be stored, or color values only in some color spaces may be stored as the measurement data. The former has the advantage of speeding up the processing in the case of reading the measurement file and trying to display the color values in the user's desired color space.

The user information storage part 124 stores information (user information) about the user who uses the information processing device 3. The user information includes login information such as a user account, a password, a name, an affiliation, an email address, data access authority, and the like.

The calculation part 130 is configured by using hardware such as a central processing unit (CPU) or a graphics processing unit (GPU), and reads and executes the various programs stored in the program storage part 121 to perform data transfer and instruction to respective parts of the information processing device 3, and comprehensively control the operation of the information processing device 3. The calculation part 130 also performs, by reading a titration program, a series of titration processes to determine the equivalence point based on the images captured by the camera 10. The function parts realized by the calculation part 130 reading the titration program include a capture control part 131, a drip control part 132, a display control part 133, a setting part 134, an image generation part 135, an area designation part 136, a pixel value acquisition part 137, a color value acquisition part 138, a determination part 139, a data management part 140, and a user information management part 141.

The capture control part 131 controls the start and end of the capturing by the camera 10 and controls the operation of the camera 10 to perform the capturing at a predetermined capturing frame rate.

The drip control part 132 controls the operation of the electric burette 5. In particular, the drip control part 132 controls the start and end of dripping, the dripping amount per addition, the dripping interval, and the like, in the electric burette 5.

The display control part 133 displays a predetermined titration screen on the display part 30.

The setting part 134 selects a titration method, from among several titration methods, according to the input signal accepted by the operation input part 40, and reads the titration method file (parameter set) of the selected titration method from the parameter storage part 122. The setting part 134 then performs initial setting of the determination conditions for determining an equivalence point based on the information stored in such titration method file. The setting part 134 also changes the initially set determination conditions to the determination conditions specified by the user according to the input signal accepted by the operation input part 40.

The image generation part 135 generates image data that represents an image in which the sample solution is captured, based on an image signal output from the camera 10.

The area designation part 136 designates a specific area in the image in which the sample solution is captured as an observation area, according to the input signal accepted by the operation input part 40.

The pixel value acquisition part 137 acquires a pixel value in an area of the image, in which the sample solution is captured, the image being generated by the image generation part 135. More specifically, the pixel value acquisition part 137 acquires the pixel value in the observation area of the image.

The color value acquisition part 138 acquires a color value of the type set by the setting part 134, based on the pixel value acquired by the pixel value acquisition part 137. In particular, the color value acquisition part 138 acquires R, G, and B values from the image data about the observation area, and calculates the color value using these R, G, and B values and a predetermined arithmetic equation.

The determination part 139 evaluates the color value acquired by the color value acquisition part 138 based on the determination conditions set by the setting part 134. Then, if the color value satisfies the determination criterion, it is determined that an equivalence point has been reached.

The data management part 140 manages various data stored in the measurement file storage part 123. As an example, the data management part 140 may perform processing, such as creating a measurement file each time the titration process is performed so as to store it in the measurement file storage part 123, retrieving and reading the measurement file stored in the measurement file storage part 123 according to the operation made to the operation input part 40, and the like.

Here, when saving a new measurement file, the data management part 140 may store the hash value obtained by hashing the original measurement file in the measurement file storage part 123, in addition to the original measurement file. In this case, when reading and displaying the saved measurement file, the data management part 140 may hash the measurement file to be read and compare the hash value with the hash value of the original measurement file. Thereby, even if the measurement file has been tampered with, it is still possible to identify the fact of the tampering and the location where the tampering has been made by comparing the hash value of the tampered measurement file with the hash value of the original measurement file.

The user information management part 141 manages the user information stored in the user information storage part 124 based on information input from the operation input part 40, and also performs encryption of passwords, authentication of users, management of access authority to data, and the like.

With regard to the password, the user information management part 141 may only store the hash value obtained by hashing the password in the user information storage part 124. In this case, even if the login information is leaked from the information processing device 3, it is still possible to prevent a third party making unauthorized access to the information processing device 3 since the original password cannot be recovered from the hash value. When hashing passwords, the user information management part 141 may also use salt (an arbitrary string given to the password before hashing) and pepper (a fixed string given to the password before hashing). In this case, the data management part 140 may store the pepper in a different layer from the user information, or store it in another storage device that is to be connected by wired or wireless communication with the information processing device 3.

### <Operation of Titration System>

First, the information processing device 3 requires the accessing user to enter his/her user account and password, and performs authentication. If the authentication is successful, the titration system 1 starts the following operations regarding the titration.

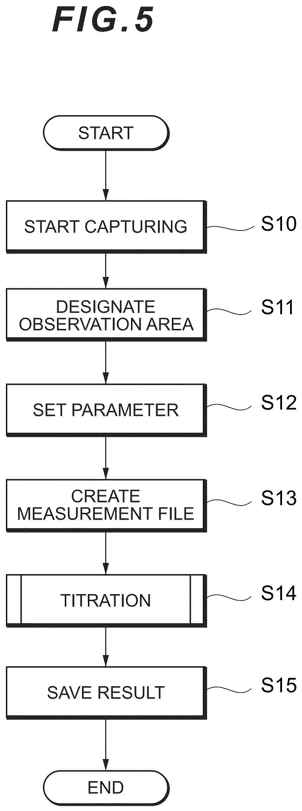

FIG. 5 is a flowchart showing operations of a titration system according to an embodiment of the present invention.

First, the titration system 1 causes the camera 10 to start capturing (step S10). Thereby, an image is generated in the information processing device 3 based on the image signal sequentially output from the camera 10.

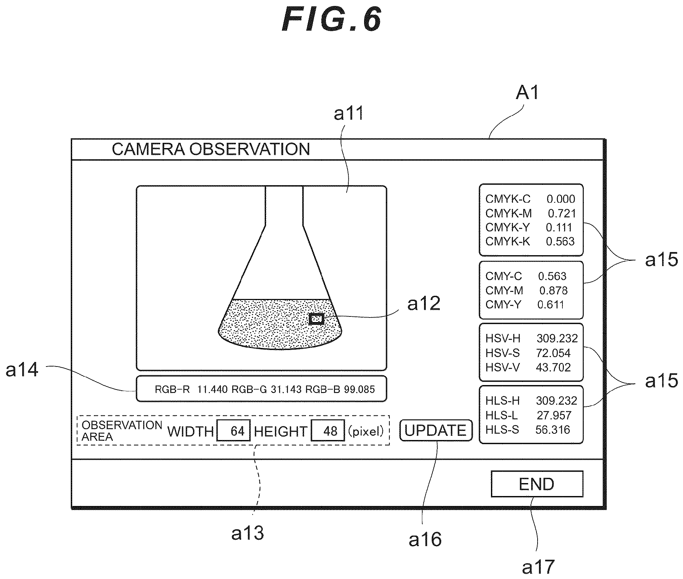

FIG. 6 is a schematic diagram illustrating a camera observation screen displayed on the display part 30 when the camera 10 starts capturing. In the camera observation screen A1, there are provided: an image display area a11 for displaying the image captured by the camera 10; a frame a12 shown within the image; a size display area a13 for indicating the size of the frame a12; a pixel value display area a14 for displaying a pixel value (R, G, and B values in the RGB color space) in the frame a12; a color value display area a15 for displaying a value obtained by converting the pixel value to a color value in various types of color spaces (CMYK color space, CMY color space, HSV color space, HLS color space); an update button a16; and an end button a17. A statistical value such as an average value or median value of pixel values of each pixel located in the frame a12 may be displayed as the pixel value. The user can change the position and size of the frame a12 in the image display area a11 by using the operation input part 40.

The titration system 1 then designates an observation area (step S11). Here, the titration system 1 updates the values in the pixel value display area a14 and the color value display area a15 when an operation of pressing (e.g., clicking or tapping; the same applies hereinafter) the update button a16 is performed. The user can adjust the position and size of the frame a12 while checking the updated values. In addition, the titration system 1 designates the area enclosed by the frame a12 as the observation area for the series of titration processes when the end button a17 is pressed.

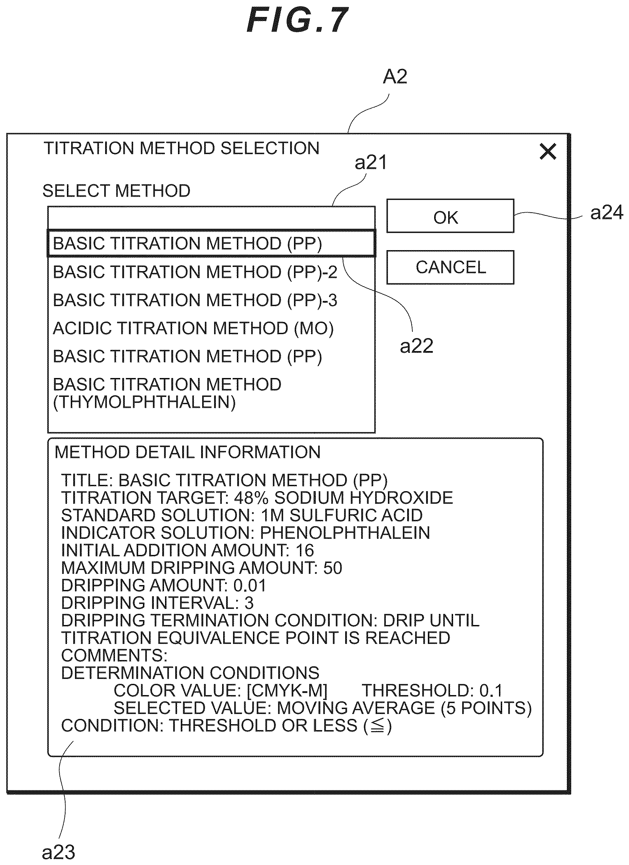

The titration system 1 then performs the setting of parameters (step S12). FIG. 7 is a schematic diagram illustrating a method selection screen displayed on the display part 30 when setting the parameters. In the method selection screen A2, there are provided: an area a21 for selecting a method; an area a23 for displaying method detail information ; and an OK button a24. The titles of multiple titration method files stored in the parameter storage part 122 are displayed in the method selection area a21. In addition, information about the method, over which the cursor a22 is placed in the method selection area a21; namely, the name of the selected titration method, information on titration target, standard solution, indicator solution, and the like, are displayed in the method detail information display area a23. When the OK button a24 is pressed, the titration system 1 reads the titration method file (parameter set) corresponding to the selected titration method from the storage part 120, and performs the initial setting of the parameters. Hereinafter, it will be assumed that the parameters of the basic titration method (PP) shown in FIG. 4 are set, as an example.

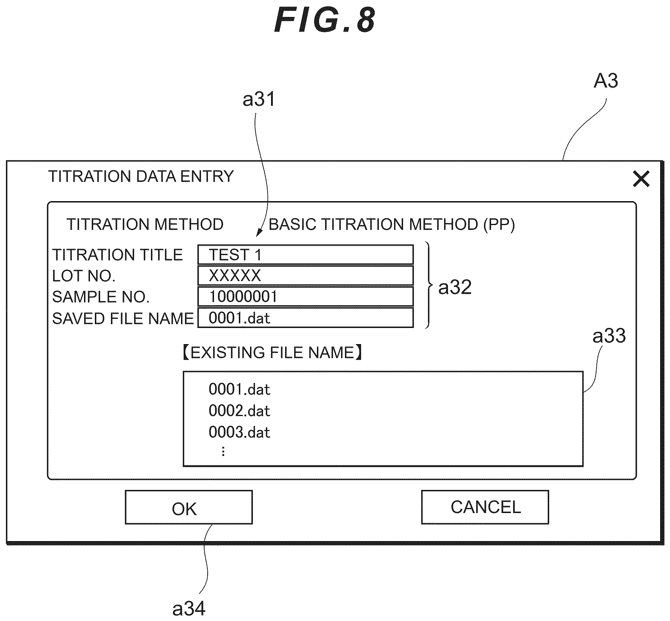

The titration system 1 then creates a measurement file (step S13). FIG. 8 is a schematic diagram illustrating a measurement file creation screen. In the measurement file creation screen A3, there are provided: a field a31 for displaying a titration method; a field a32 for entering file information such as the titration title, the lot number of the sample to be titrated, the sample number, the saved file name, and the like; a file name display area a33 for displaying existing file names; and an OK button a34. The titration title is a name representing the titration process to be performed this time, and can be arbitrarily determined by the user. The user can create a new measurement file by entering necessary information arbitrarily in the file information entry field a32. In addition, by placing the cursor over one of the file names displayed in the file name display area a33, the file information in such file is reflected in the file information entry field a32, and the user may create a new file by arbitrarily modifying the information displayed in the entry field a32. The titration system 1 creates a new measurement file for the titration method displayed in the titration method display field a31 when the OK button a34 is pressed, with the necessary information being entered in the file information entry field a32.

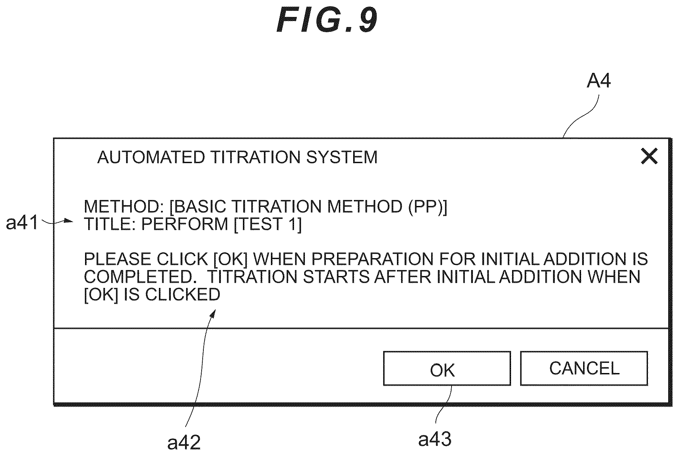

The titration system 1 then performs the titration (step S14). FIG. 9 is a schematic diagram illustrating a method confirmation screen. In the method confirmation screen A4, there are provided: an area a41 for displaying the titration method and the titration title; an area a42 for displaying the confirmation message; and an OK button a43. The titration system 1 starts the titration process when the OK button a43 is pressed. If a stirrer is incorporated in the stage 7 on which the flask 4 is mounted, the stirrer may start at this time. The stirrer may be started under the control of the titration system 1 or may be started by the user manually switching it on.

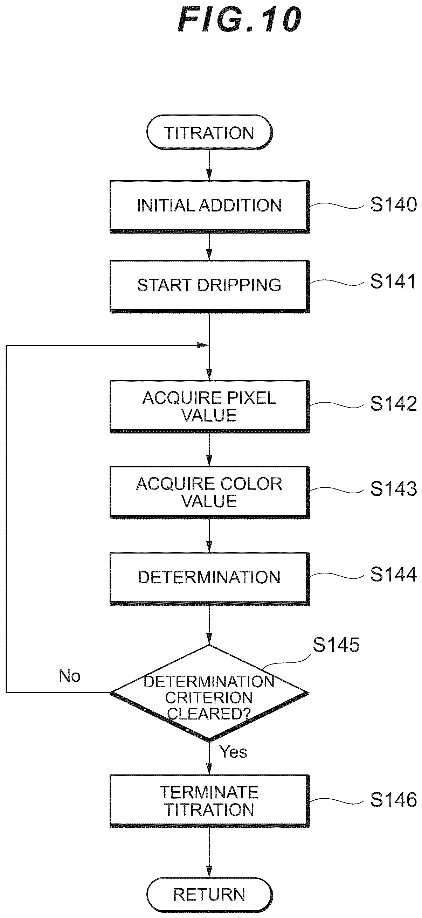

FIG. 10 is a flowchart showing the titration process in FIG. 5. First, the titration system 1 performs the initial addition of the standard solution by controlling the electric burette 5 based on the initial addition amount stored in the titration method file (step S140). If the initial addition amount is not set, the step S140 may be omitted.

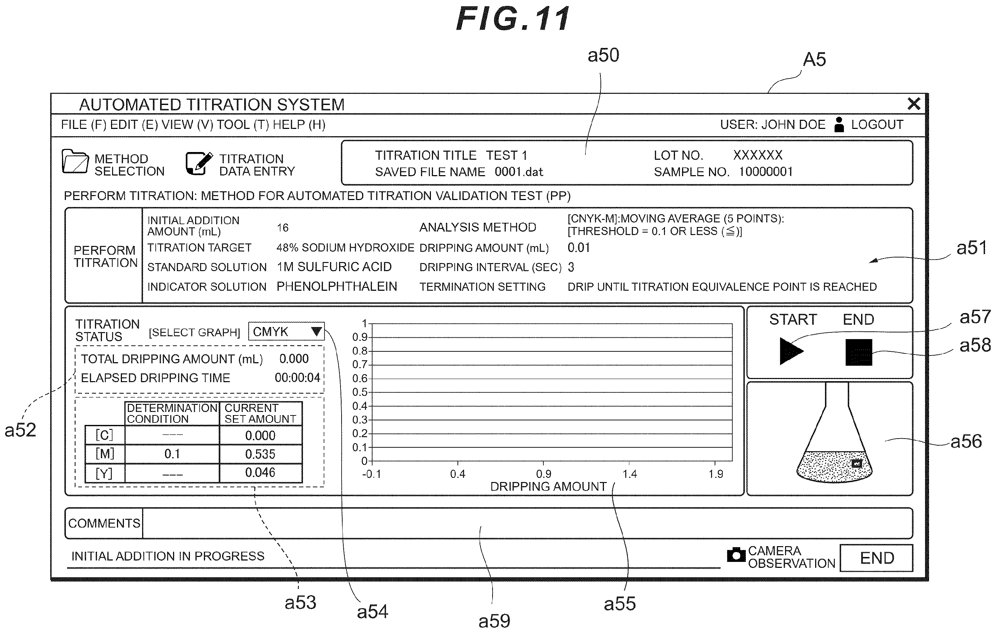

FIG. 11 is a schematic diagram illustrating a titration screen displayed on the display part 30 during the initial addition. In the titration screen A5, there are provided: an area a50 for displaying the file information of the measurement file; a parameter display area a51 for displaying the parameters that are set based on the titration method file; a titration status display area a52 for displaying the dripping amount of the standard solution and the elapsed titration time; a color value display area a53 for displaying the current value of the color value that is used to determine the equivalence point; an area a54 for selecting the color space to be displayed in a graph; an area a55 for displaying the color values in a graph; an area a56 for displaying the image; a start button a57; an end button a58; and a comment area a59. In the graph display area a55, each color value in a color space (e.g., the CMYK color space) including the initially set color values is displayed in a graph. By manipulating the area a54 for selecting the color space, the user can cause the graph display area a55 to display the color values in other color spaces (e.g., the RGB color space, CMYK color space, CMY color space, HSV color space, and HLS color space).

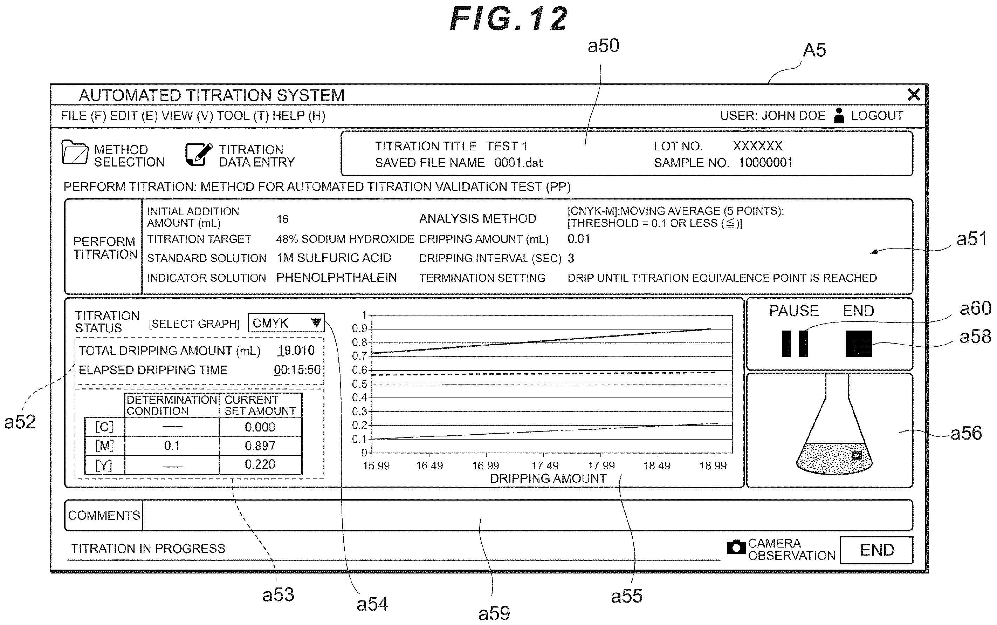

The titration system 1 starts the dripping of the standard solution when the start button a57 is pressed after the initial addition (step S141). FIG. 12 is a schematic diagram illustrating a titration screen displayed on the display part 30 after the dripping of the standard solution has started. A pause button a60 is displayed on the titration screen A5 after the start of the dripping. The user can interrupt the titration by pressing the pause button a60, as necessary. In addition, the titration can be force-terminated by pressing the end button a58. Further, the user can enter comments at any time in the comment area a59.

The titration system 1 acquires a pixel value in the observation area in synchronization with the dripping interval of the standard solution (step S142). In particular, the titration system 1 acquires the pixel values (R, B, and G values) of the pixels configuring the designated observation area (see step S11) in the image, and calculates a statistical value such as an average value or median value of these pixel values.

The titration system 1 then acquires the color values used to determine the equivalence point based on the acquired pixel values (step S143). For example, in the case where the M-value in the CMYK color space is used to determine the equivalence point, the titration system 1 calculates the M value using the R, G, and B values acquired in step S142 and a predetermined conversion equation.

The titration system 1 then determines whether the acquired color values meet the criteria (step S144). As an example, in the case where "Threshold: 0.1, Selected Value: Moving average (5 points), Condition: Threshold or less" is set as the determination criterion, the titration system 1 calculates the average value of the color values acquired for the four additions before the current dripping and the color value currently acquired, and determines whether this average value is equal to or less than the threshold of 0.1.

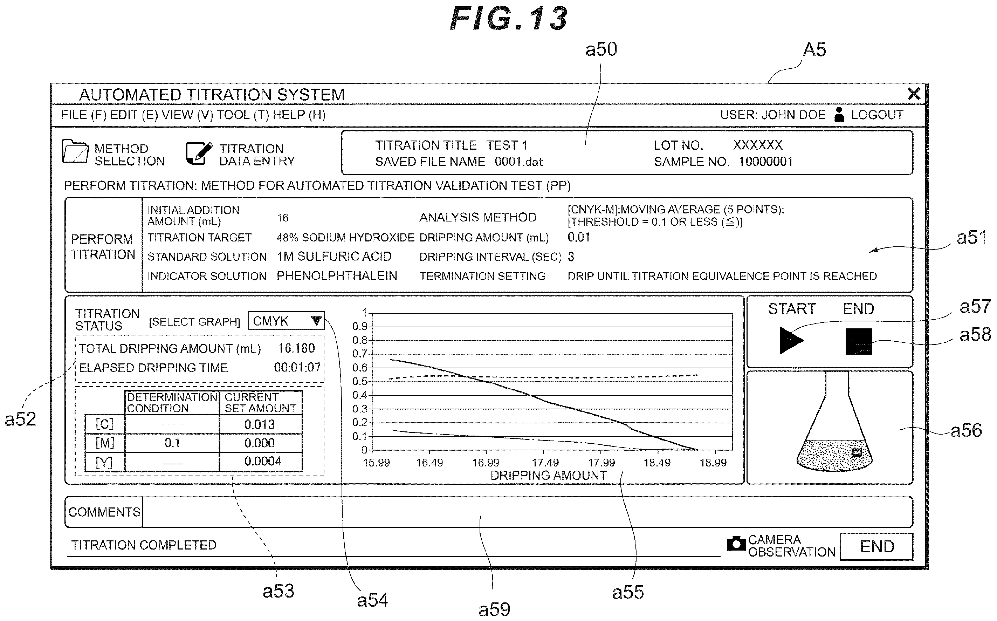

In the case where the color values fail to meet the determination criterion (step S145: No), the processing returns to step S142. On the other hand, in the case where the color values meet the criterion (i.e., the case where the equivalence point is reached; step S145: Yes), the titration system 1 terminates the dripping of the standard solution (step S146), and then the processing returns to the main routine. FIG. 13 is a schematic diagram illustrating a titration screen displayed on the display part 30 after the dripping of the standard solution has terminated. The start button a57 is displayed again on the titration screen A5 shown in FIG. 13. It should be noted that the titration system 1 may stop the dripping of the standard solution when it determines that the color values meet the determination criterion, and resume the dripping when the start button a57 is pressed. In other words, the dripping can be resumed at the user's discretion. In addition, in the case where a specific dripping termination condition is set in the titration method file, the titration system 1 controls the dripping termination according to this dripping termination condition.

Referring to FIG. 5 again, after the termination of the titration, the titration system 1 saves the titration results (step S15). In particular, the data on the color values in each space acquired every time the standard solution is dripped between the start of the dripping and the end of the dripping is stored in the measurement file, along with the image data, and stored in the measurement file storage part 123. At this time, the hash value obtained by hashing the measurement file may also be stored in the measurement file storage part 123. Thereafter, the titration process in the titration system 1 is terminated.

### <Analysis of Titration Results>

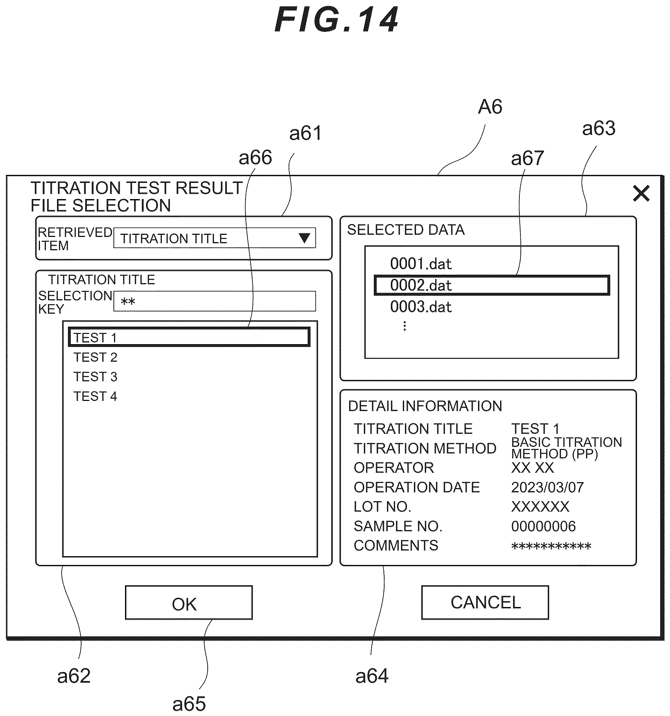

In the titration system 1, the user can also analyze the titration results retroactively using the saved measurement files. FIG. 14 is a schematic diagram illustrating a measurement file selection screen. In the file selection screen A6, there are provided: an area a61 for selecting a retrieving item; an area a62 for displaying the titration title extracted by the retrieval; an area a63 for selecting data; an area a64 for displaying detailed information; and an OK button a65.

The retrieval of the measurement file can be performed based, in addition to the titration title, on the titration method, username (operator), operation date, lot number, sample number, and comment. A list of measurement file names related to the titration title over which the cursor a66 is placed in the display area a62 is displayed in the data selection area a63. Detailed information related to the measurement file over which the cursor a67 is placed in the data selection area a63 is displayed in the detailed information display area a64. The titration system 1 reads the selected measurement file from the measurement file storage part 123 and displays it on the display part 30 when the OK button a65 is pressed while the measurement file name is selected in the data selection area a63.

At this time, the titration system 1 may hash the selected measurement file and compare such hash value with the hash value of the original measurement file stored in the measurement file storage part 123. In the case where there is a difference between the two hash values as a result, the titration system 1 may display a warning on the display part 30 to the effect that the measurement file may have been tampered with.

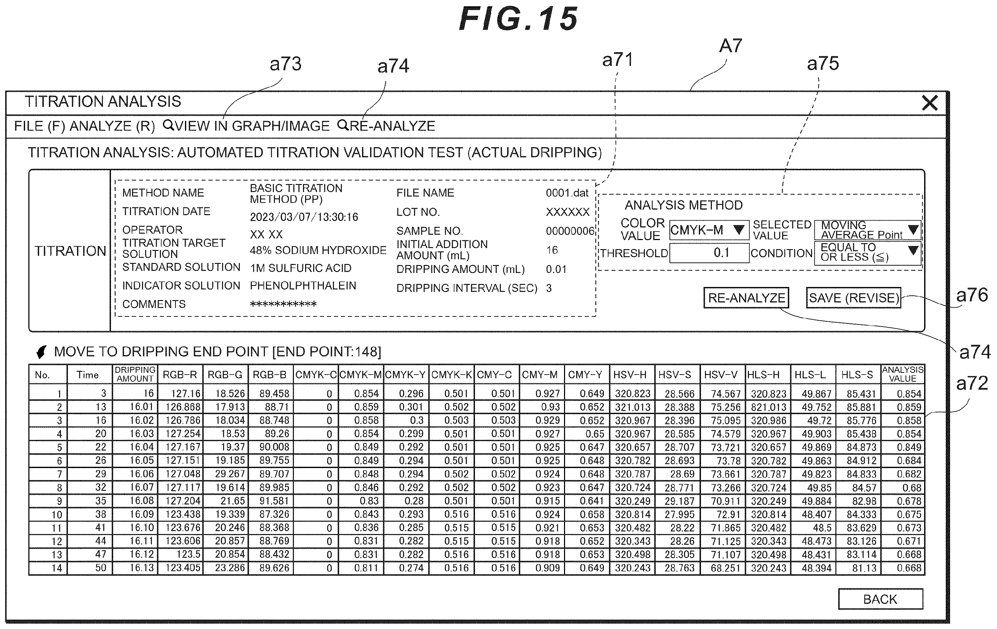

FIG. 15 is a schematic diagram illustrating a titration analysis screen. In the titration analysis screen A7, there are provided: an area a71 for displaying detailed information, in which the titration method, file name, various parameters, and the like in the measurement file read from the measurement file storage part 123 are displayed; an area a72 for displaying measurement data; a graph/image display button a73; a re-analysis button a74; an area a75 for selecting an analysis method; and a save button a76. Various color values that can be acquired in the titration system 1 may be displayed on the measurement data display area a72, in addition to the pixel values acquired during the titration process and the color values set as the determination conditions.

The color value, threshold value, selected value, and conditions when determining the equivalence point can be selected by means of the user's operations in the analysis method selection area a75. The titration system 1 performs re-analysis of the equivalence point using the changed determination conditions, after the analysis method selection area a75 is operated and the re-analysis button a74 is pressed. The titration system 1 also saves a new file containing the changed contents when the save button a76 is pressed.

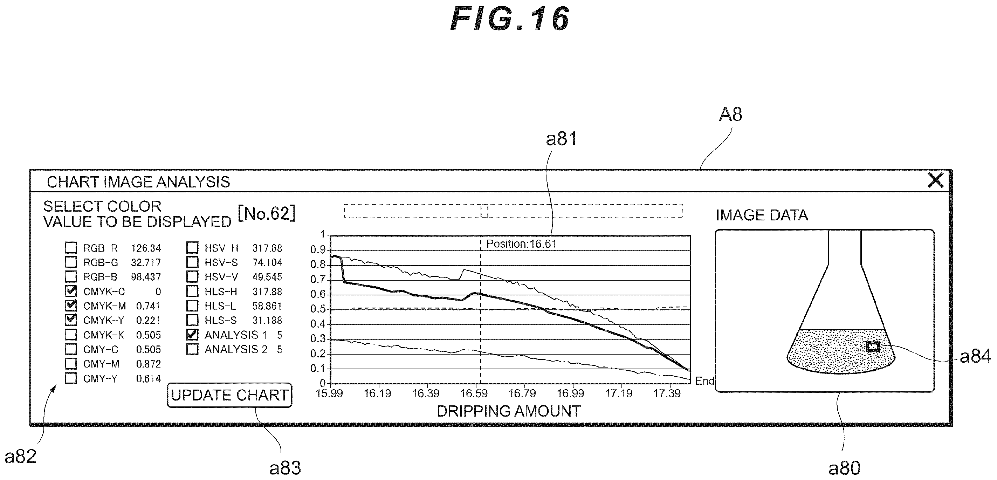

The titration system 1 also displays a graph/image display screen A8 illustrated in FIG. 16 on the display part 30 when the graph/image display button a73 is pressed. In the graph/image display screen A8, there are provided: an image display area a80 for displaying the image captured by the camera 10; a graph display area a81 for displaying the graph of color values; an area a82 for selecting color values; and a graph update button a83.

The user can select the types of color values to be used to determine the equivalence point by checking the check boxes of the color values in the various color spaces displayed in the color value selection area a82. When the graph update button a83 is pressed with one of the check boxes being checked, the titration system 1 displays the graph of the checked color values in the graph display area a81.

A frame a84 representing the observation area is shown in the image display area a80. The user can change the position and size of this frame a84 by using the operation input part 40. When the frame a84 has been changed, the titration system 1 may acquire the pixel value of each pixel in the changed frame a84 and re-calculate the color value in the measurement data display area a72 (see FIG. 15).

### <Editing of Titration Method>

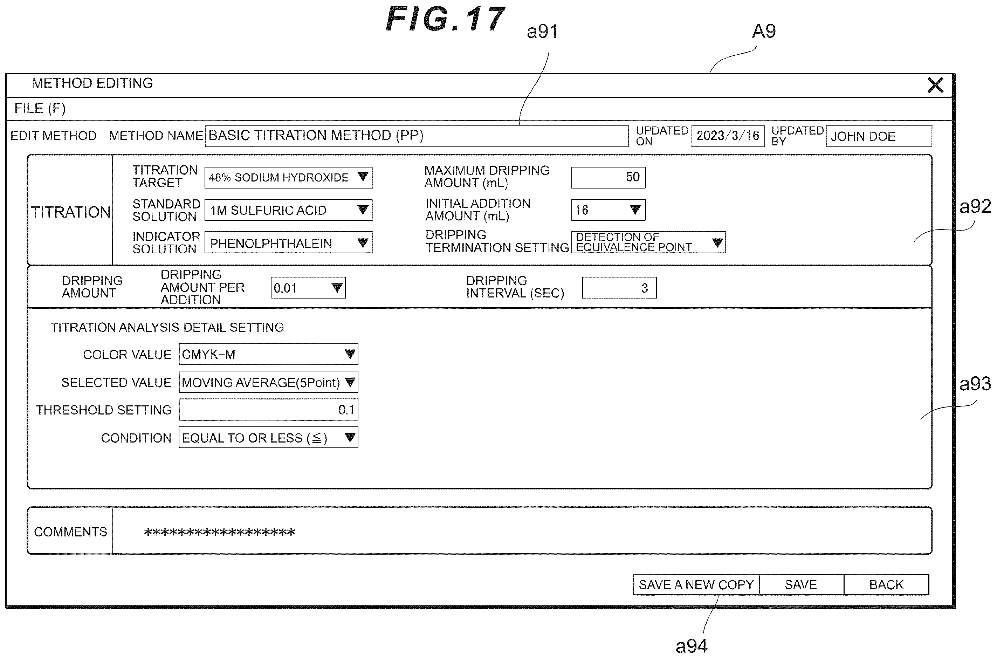

With the titration system 1, the user can create a new titration method by editing an existing titration method. FIG. 17 is a schematic diagram illustrating a method editing screen. In the method editing screen A9, there are provided: a field a91 for entering a method name; an area a92 for editing the method; an area a93 for editing the analysis method; and a "Save a new copy" button a94.

When the name of a titration method is entered in the method name entry field a91, the titration system 1 reads the relevant titration method file from the parameter storage part 122, and displays parameters such as the maximum dripping amount, initial addition amount, titration termination setting, dripping amount per addition, dripping interval, and the like, in addition to the titration target (sample solution), standard solution, and the indicator solution in the method editing area a92, and also displays the determination conditions for the equivalence point (the type of color value, selected value, threshold, condition) in the analysis method editing area a93. The user can change the contents displayed in the method editing area a92 and the analysis method editing area a93. As a means of changing the contents, a method of selecting the desired content from the drop-down list provided for each item or a method of entering arbitrary content by text may be used. When the new save button a94 is pressed, the titration system 1 creates a new titration method file in which the contents of the edited titration method are stored, and stores it in the parameter storage part 122. Thereby, the file name of the newly created titration method file will be displayed on the method selection screen A2 illustrated in FIG. 7.

As described above, according to the present embodiment, an equivalence point can be determined by appropriate color values and determination criteria, depending on the combination of an analyte and a standard solution added with a titration indicator, and accurate titration can be performed. In addition, a versatile titration system can be realized since multiple parameter sets are stored in advance in the storage part, depending on the combination of an analyte and a standard solution added with a titration indicator.

Further, according to the present embodiment, even users who are unfamiliar with titration can easily and accurately determine an equivalence point since, in each titration method, appropriate color values and determination criteria for determining an equivalence point are initially set in advance, depending on the combination of an analyte and a standard solution added with a titration indicator.

Moreover, according to the present embodiment, an equivalence point can be determined based on the desired color value type and determination since the user can change the initially set color value type and determination criterion by performing an operation on the operation input part.

Furthermore, according to the present embodiment, an appropriate observation area can be set at the user's discretion since a specific area in the image can be designated as an observation area, depending on the input signal accepted by the operation input part.

Moreover, according to the present embodiment, even in the case where an original measurement file has been tampered with, the fact of the tampering and the location where the tampering has been made can still be identified since the hash value of the original measurement file is stored, in addition to the original measurement file in which the measurement data of the titration is stored.

### (Validation Experiment)

A titration test was carried out to measure the amino acidity of sake in the titration system 1 according to the present embodiment. The measurement method was performed in accordance with the measurement of the amino acidity based on the National Research Institute of Brewing's standard method of analysis 3-6 amino acid B) ethanol addition method (cf.: https://www.nta.go.jp/taxes/sake/sonota/sokuteihoho/pdf/10.pdf).

In this test, the measurement of the amino acidity based on the ethanol addition method is carried out as follows:
Sample solution: Sake (refined sake)
Indicator: Phenolphthalein indicator (0.5 g of phenolphthalein is dissolved in 50mL of ethanol)
Standard solution: 0.1 mol/L (N/10) sodium hydroxide solution
Ethanol: Ethanol (99.5) (Special grade) (according to the specifications of JIS K8101:2006)
Step 1: Add a few drops of phenolphthalein indicator to a 10mL sample.
Step 2: Neutralize by adding N/10 sodium hydroxide solution to the solution from Step 1 until it shows a pale pink color.
Step 3: Add 25mL of ethanol to the solution from Step 2 and return it to colorless.
Step 4: Add N/10 sodium hydroxide solution to the solution from Step 3 until it shows a pale pink color again, and perform titration. Then find the titration value "a" at the end point.
Step 5: Using a titer F, a × F (rounded to one decimal place) is considered to be the amino acidity.

In step 4 above, the standard solution (N/10 sodium hydroxide solution) was added in 50 µL increments. Then, the end point was determined by visual observation while the measurement data was acquired by the titration system 1. The titration amount at the end point determined by visual observation was 1.05 mL. The change of color values in various color spaces with respect to this titration amount was verified.

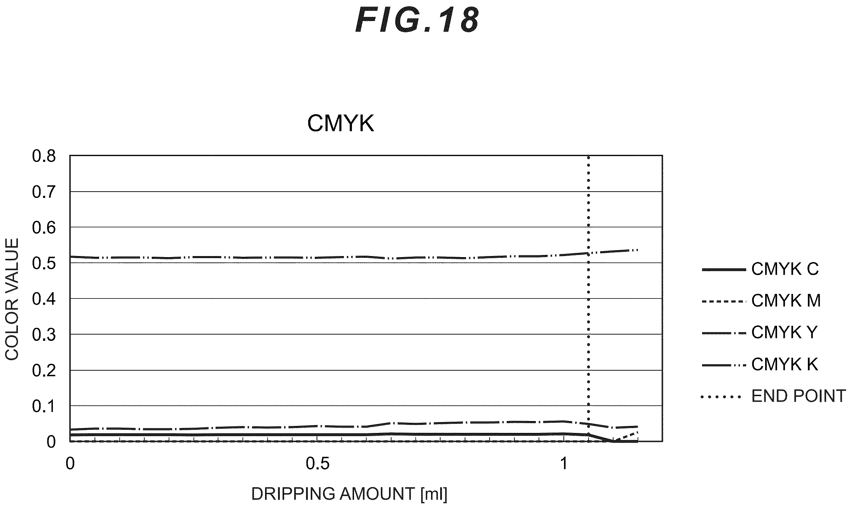

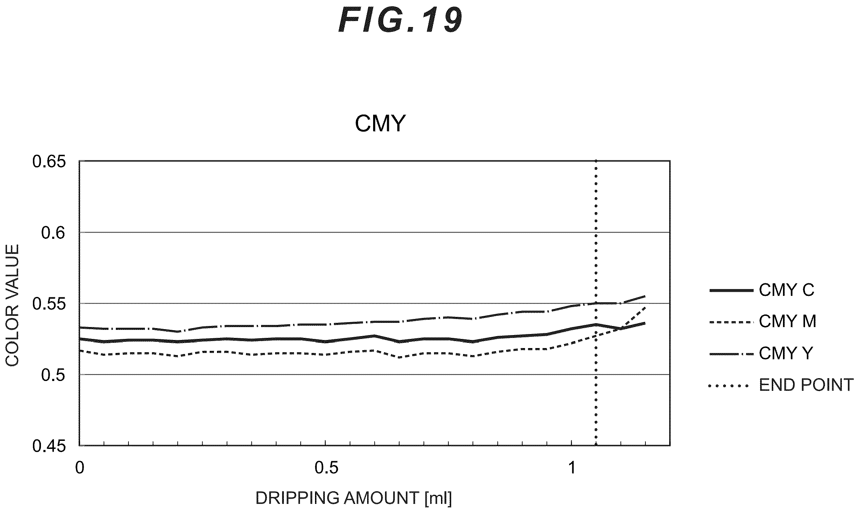

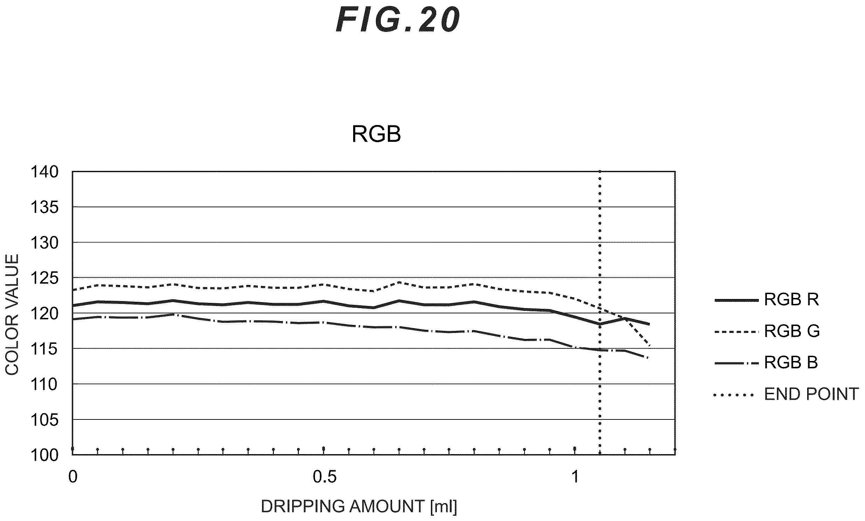

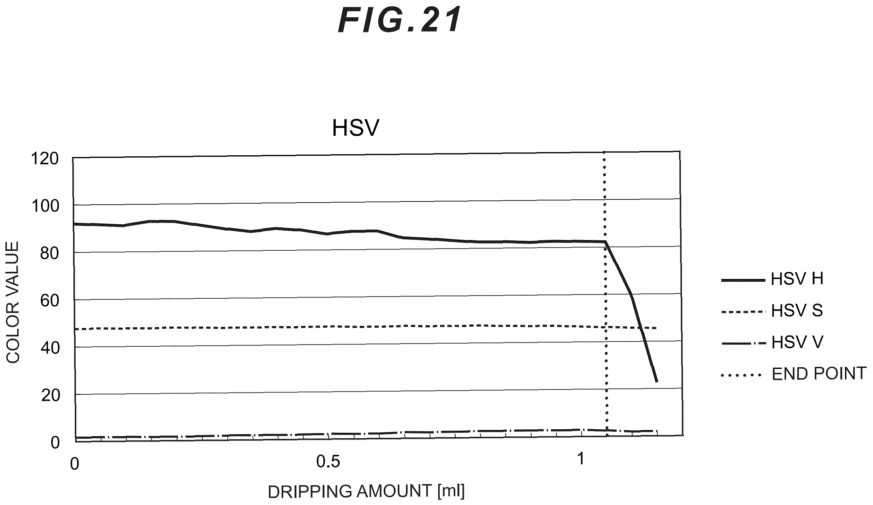

FIGS. 18 to 21 are graphs showing measurement data in the validation experiments. In FIGS. 18 to 21, the horizontal axis indicates the dripping amount of the standard solution after the addition of ethanol (step 3). For the vertical axis, FIG. 18 shows the color values in the CMYK color space, FIG. 19 shows the color values in the CMY color space, FIG. 20 shows the color values in the RGB color space, and FIG. 21 shows the color values in the HSV color space.

In the case of the CMYK color space (see FIG. 18), no significant change was observed in each color value even at the end point (1.05 µL). This is thought to be because, in this experiment, turbidity was generated when the standard solution was dripped, and the change of each color value was slowed down. In contrast, in the case of the CMY color space (see FIG. 19), there was a sharp change in the M value near the end point. The M value at the end point was 0.525.

In the case of the RGB color space (see FIG. 20), the R, G, and B values all tended to decline before reaching the end point, but when the end point was reached, the R value started to rise. On the other hand, in the case of the HSV color space (see FIG. 21), when the end point was reached, no significant change was observed in any of the H, S, and V values, and the H value dropped sharply when the next drop was dripped after the end point (1.05 µL).

From the above experiment results, it was found that it is appropriate to determine the end point in the CMY color space for the measurement of amino acidity based on the ethanol addition method. In other words, in the CMY color space, since the M value becomes steeper near the end point, it is possible, by setting a threshold of the M value (e.g., 0.525), to clearly determine whether the threshold has been exceeded each time the standard solution is dripped.

The present invention is not limited to the embodiments and variations described above, and may be carried out in various other forms within the scope that does not depart from the spirit of the present invention. For example, such various other forms may be formed by excluding some components from all of the components shown in the embodiment and variations, or by appropriately combining the components shown in the embodiment and variations.

### DESCRIPTION OF REFERENCE NUMBERS

1 ... Titration system; 2 ... Device body; 2a ... Stage installation part; 2b ... Back plate installation part; 3 ... Information processing device; 4 ... Flask; 4a ... Sample solution; 5 ... Electric burette; 5a ... Standard solution; 6 ... Support part; 7 ... Stage; 8 ... Back plate; 10 ... Camera; 20 ... Light source; 30 ... Display part; 40 ... Operation input part; 110 ... External interface; 120 ... Storage part; 121 ... Program storage part; 122 ... Parameter storage part; 123 ... Measurement file storage part; 124 ... User information storage part; 130 ... Calculation part; 131 ... Capture control part; 132 ... Drip control part: 133 ... Display control part; 134 ... Setting part; 135 ... Image generation part; 136 ... Area designation part; 137 ... Pixel value acquisition part; 138 ... Color value acquisition part; 139 ... Determination part; 140 ... Data management part; 141 ... User information management part

## Claims

1. A titration system, comprising:
a camera installed so as to be able to capture a flask containing a sample solution including an analyte and configured to capture the sample solution and output an image signal;
an image generation part configured to generate image data that represents an image in which the sample solution is captured, based on an image signal output from the camera;
a storage part configured to store multiple parameter sets including: a type of color value to be used as a determination target when determining an equivalence point; and a determination criterion corresponding to the type of color value, depending on a combination of an analyte and a standard solution added with a titration indicator;
an operation input part configured to accept an input signal that depends on an external operation;
a setting part configured to read, from among the multiple parameter sets, a parameter set that depends on an input signal accepted by the operation input part, from the storage part, and to set a type of color value to be used as a determination target, and a determination criterion, based on the parameter set;
a pixel value acquisition part configured to acquire a pixel value in an area of an image, in which a sample solution is captured, the image being generated by the image generation part;
a color value acquisition part configured to acquire a color value of the type set by the setting part, based on the pixel value acquired by the pixel value acquisition part; and
a determination part configured to evaluate the color value acquired by the color value acquisition part, based on the determination criterion set by the setting part.

2. The titration system according to claim 1, wherein the setting part is configured to set multiple types of color values as a determination target and to set a relative relationship between the multiple types of color values as a determination criterion.

3. The titration system according to claim 1, wherein the setting part is configured to set one type of color value as a determination target and to set a threshold of the one type of color value as a determination criterion.

4. The titration system according to claim 1, wherein the setting part is configured to set one type of color value as a determination target and to set a mode of change of the one type of color value as a determination criterion.

5. The titration system according to any one of claims 1 to 4, wherein the setting part is further configured to change the set color value type and determination criterion, depending on an input signal accepted by the operation input part.

6. The titration system according to any one of claims 1 to 5, further comprising an area designation part configured to designate a specific area within the image as an observation area, depending on an input signal accepted by the operation input part, and
the pixel value acquisition part is configured to acquire a pixel value in the observation area.

7. The titration system according to any one of claims 1 to 6, wherein the storage part is configured to further store a measurement file that includes a pixel value acquired by the pixel value acquisition part and a color value acquired by the color value acquisition part, and is also configured to further store a hash value of the measurement file.

8. A program that causes a computer to execute the following steps, the computer including an operation input part that accepts an input signal that depends on an external operation, and a storage part,
the storage part storing multiple parameter sets including: a type of color value to be used as a determination target when determining an equivalence point; and a determination criterion corresponding to the type of color value, depending on a combination of an analyte and a standard solution added with a titration indicator, the steps including:
an image generation step in which image data is generated, the image data representing an image in which a sample solution is captured, based on an image signal output from a camera installed so as to be able to capture a flask containing a sample solution including an analyte and configured to capture the sample solution and output an image signal;
a setting step in which, a parameter set is read, from among the multiple parameter sets, that depends on an input signal accepted by the operation input part, from the storage part, and a type of color value to be used as a determination target, and a determination criterion, are set based on the parameter set;
a pixel value acquisition step in which a pixel value is acquired in an area of an image, in which a sample solution is captured, the image being generated in the image generation step;
a color value acquisition step in which a color value of the type set in the setting step is acquired, based on the pixel value acquired in the pixel value acquisition step; and
a determination step in which the color value acquired in the color value acquisition step is evaluated based on the determination criterion set in the setting step.
